(19) Europäisches Patentamt
European Patent Office
Office européen des brevets

(11) Publication number: **0 172 282**
**A1**

(12) **EUROPEAN PATENT APPLICATION**

(21) Application number: 84305632.6

(22) Date of filing: 17.08.84

(51) Int. Cl.⁴: C 04 B 24/12
C 07 F 9/65

(43) Date of publication of application:
26.02.86 Bulletin 86/9

(84) Designated Contracting States:
DE FR GB NL

(71) Applicant: THE DOW CHEMICAL COMPANY
2030 Dow Center Abbott Road P.O. Box 1967
Midland, MI 48640(US)

(72) Inventor: Crump, Druce K.
142 Oyster Creek Drive No.48
Lake Jackson Texas 77566(US)

(72) Inventor: Wilson, David A.
229 San Saba
Richwood Texas 77531(US)

(74) Representative: Raynor, John et al,
W.H.Beck, Greener & Co 7 Stone Buildings Lincoln's Inn
London WC2A 3SZ(GB)

(54) **The use of polymeric alkylenephosphoric acid piperazine derivatives as set retarding compounds for use in cement slurries.**

(57) Polymers which are the reaction product of N-aminoethylpiperazine and a dihalo or epoxy-halo compound are subsequently phosphonomethylated to provide products which are useful as cement set retarders.



Croydon Printing Company Ltd.

0172282

# THE USE OF POLYMERIC ALKYLENEPHOSPHORIC ACID PIPERAZINE DERIVATIVES AS SET RETARDING COMPOUNDS FOR USE IN CEMENT SLURRIES

The invention pertains to aqueous hydraulic cement slurry compositions containing particular set retarders which are phosphonic acid derivatives of adducts of N-aminoethylpiperazine and a dihalo or epoxyhalo compound.

Hydrophobic-substituted phosphonic or phosphinic acids and their alkali metal salts have been used in cements, primarily soil/cement mixtures, to improve the freeze-thaw properties and salt-resistance. Six- to eighteen-carbon alkyl phosphonic acids or their alkali metal salts are so described in U.S. Patent 3,794,506. A plugging mixture for high temperature oil and gas wells comprising Portland cement and 1-hydroxy ethylidene-phosphonic acid trisodium or tripotassium salts as set time extenders is described in Derwent abstract 71376B/39 (1979) of USSR Patent 640,019. The use of these phosphonate salts at temperatures of 75°C to 150°C in amounts of 0.1-0.3 percent by weight is described in the abstract.

(A1 26

M. ZAMBUTO 18 DEC 1985

Other organic phosphorous acid derivatives are taught to be useful additives in cement compositions as turbulence-inducing and flow-property improver additives (U.S. 3,964,921 and 4,040,854, respectively). Another turbulence-inducer is a pyrolysis product of urea and a bis(alkylenepyrophosphate) (U.S. 3,409,080).

Alkylene diphosphonic acids and their water soluble salts are described as set time extenders and water reducing agents for gypsum plasters (U.S. 4,225,361). Lignins which have been phosphonoalkylated through an ether linkage or corresponding sulfonates, sulfides, hydroxyl or amine derivatives are taught to be useful primarily as dispersants or surfactants (U.S. 3,865,803) and are also said to be useful as "cement additives" without indicating specific uses.

Ultra-rapid hardening Portland cement compositions are described which contain various acid salt additives (U.S. 4,066,469). It states that use of acid phosphates as the acid salt additives is excluded since the phosphates have a characteristically powerful retarding property peculiar to them.

Most of the cement used in oil wells is called portland cement. Portland cement is manufactured by calcining raw materials consisting of limestone, clay, shale, and slag together at 2,600°F to 2,800°F (1410°C to 1520°C) in a rotary kiln.

The resulting material, is cooled and interground with small percentages of gypsum to form portland cement. In addition to the above raw materials, other components such as sand, bauxite, iron oxide, etc., may

be added to adjust the chemical composition depending upon the type of portland cement desired.

The principal components of the finished portland cement are lime, silica, alumina, and iron. These components form the following complex compounds: Tricalcium aluminate, ($3CaO \cdot Al_2O_3$), tetracalcium aluminoferrite, ($4CaO \cdot Al_2O_3 \cdot Fe_2O_3$), tricalcium silicate, ($3CaO \cdot SiO_2$), and dicalcium silicate, ($2CaO \cdot SiO_2$).

When water is added to cement, setting and hardening reactions begin immediately. The chemical compounds in the cement undergo the processes of hydration and recrystallization which results in a set product. The maximum amount of water that can be used with an oil-well cement is the amount which can be added before solids separation occurs. The minimum amount of water is the amount required to make the slurry pumpable. Therefore, the normal water ratio is governed by the maximum and minimum limits for a particular class of cement.

Thickening time is the time that the cement remains pumpable in the well. This is the most critical property of an oil-well cement. The thickening time has to be long enough to be pumped into place and short enough to permit operations to resume quickly. Generally, 3 hours provides the necessary placement time plus a safety factor.

Other factors, such as fluid loss, viscosity and density must be taken into consideration and additives are known to the art-skilled which affect each of these factors as well as that of set, or thickening, time as

mentioned above. Another parameter which has an effect on set time is temperature. Cement sets more rapidly as the temperature increases. This must be taken into consideration particularly when pumping cement into deeper wells since temperature increases as the depth of the well becomes greater. Temperature also affects the strength of the cement, the strength becoming less as the temperature increases.

Because of this temperature effect, it is important to retard the setting of the cement employed in the deeper wells.

It has now been discovered that certain new phosphonomethylated compounds are useful in aqueous cement slurries as set retarding additives. Some of these compounds are chelating agents, while others are useful as threshold agents in retarding the precipitation of metal ions from aqueous solution. However, not all chelating agents or threshold agents are useful as cement set-retarders.

The polymers useful in the present invention are made by reacting N-aminoethylpiperazine (AEP) with a dihalo or epoxyhalo compound and subsequently reacting the polymer formed thereby with phosphorous acid and an alkanal (aldehyde) at a low pH, usually provided by the presence of a mineral acid, e.g. hydrochloric acid. N-aminoethylpiperazine has the structure:

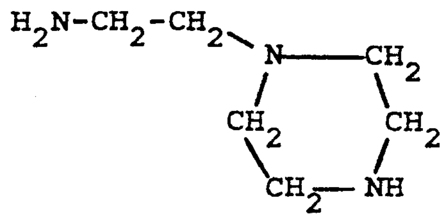

,

and may be referred to by the name 1-(2-aminoethyl)-piperazine. Hereinafter, it will be abbreviated "AEP".

The AEP can be reacted with any number of dihalo or epoxyhalo compounds in order to form a dimer or polymer. Any suitable epoxyhaloalkane (epihalohydrin) may be reacted, 1,2-epoxy-3-chloropropane (epichlorohydrin) being preferred. Generally, the epoxyhalo compound will have 3-10 carbon atoms. Other epichlorohydrin-type compounds include: 1,2-epoxy-4-chlorobutane, 2,3-epoxy-4-chlorobutane, 1,2-epoxy-5-chloropentane, 2,3-epoxy-5-chloropentane, etc. In general, the chloro derivatives are preferred, although the corresponding bromo or iodo compounds may be employed. Mixtures of epoxyhaloalkanes may also be employed.

Dihalides having from 1-20 carbon atoms may be used. Saturated dihalides having the formula $X(CH_2)_nX$, where X may be chlorine, bromine, iodine or combinations 10, but preferably 2 to 6, may be employed. Thus, for example, dichloromethane (methylene chloride), 1,2-dichloroethane (ethylene dichloride), 1,2- or 1,3-dichloropropane, 1,4- or 1,2-dibromobutane and the like may be employed.

Aralkylene dihalides can also be employed having the formula $X-H_2C-Ar-CH_2-X$ wherein Ar is

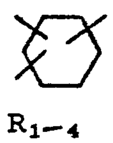 , 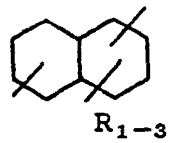 , 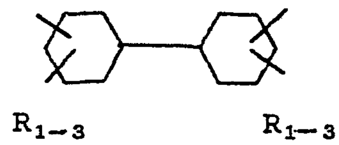

wherein R may be hydrogen, halogen, alkyl, having 1 to 4 carbon atoms, hydroxy and hydroxyalkyl, having 1 to 4 carbon atoms and X is a halogen atom.

Dihaloalkylene ethers can also be employed, e.g. bis(chloromethyl)ether or bis(chloroethyl)ether. Formulas for such ethers also include

$X-CH_2CH_2(OCH_2CH_2)_nX$ wherein n is 1 to 3 and

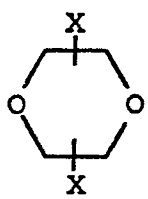

wherein X is a halogen atom.

The dihalides may also be unsaturated. Thus, 1,2-dichloroethene, 1,4-dichloro-2-butene and the like may be employed.

The conditions for making the polymer are to employ the reactants in an amount of from about 0.2 to about 1 mole of the chain extender compound, preferably about 0.25 to about 0.6, i.e. the diepoxy-, dihalo- or epoxyhalo-compound, per mole of AEP. The temperature of reaction is from about 50° to about 100°C, preferably

70°-80°C at a pressure sufficient to maintain the reactants in the liquid phase.

The phosphonomethylation (Mannich reaction) is then carried out on the product in the presence of a strong acid to maintain the pH at less than 1.

While the reaction will proceed at temperatures over a wide range, i.e., from 85° to 150°C, it is preferred that the reaction medium be maintained at refluxing. The reaction is preferably conducted at atmospheric pressure, although sub-atmospheric and superatmospheric pressures may be utilized if desired. Reaction times will vary, depending upon a number of variables, but the preferred reaction time is 1 to 5 hours, and the most preferred reaction time is 2 to 4 hours.

Although the phosphorous acid and the alkanal may be added together or separately in any order to the reaction mixture, it is preferred to add the phosphorous acid to the polyamine and then to slowly add the alkanal under refluxing conditions.

Approximately equimolar amounts of alkanal and phosphorous acid are employed for the phosphonomethylation of the amine. Excess of either the alkanal or acid can be utilized although large excesses of either would be uneconomical. The preferred process will use an amount of alkanal equivalent to the amine hydrogens available and a slight stoichiometric excess of the phosphorous acid.

Although methanal (formaldehyde) is preferred, other alkanals (aldehydes) may be employed in place of methanal such as ethanal (acetaldehyde), propanal (propionaldehyde), and the like, wherein the alkanal may contain a straight or branched chain containing up to ten carbon atoms.

Thus, the compounds useful in the present invention can be represented by the formula

$$A(BA)m$$

wherein A is an organic radical having the formula

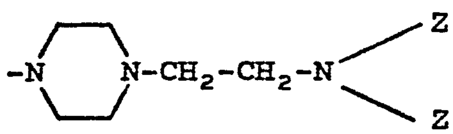

or

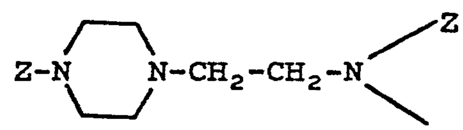

wherein Z is hydrogen, hydroxyethyl, hydroxypropyl,

$-CH_2\overset{O}{\overset{\|}{P}}-(OM)_2$, $-CH_2\overset{O}{\overset{\|}{C}}OM$ or BA wherein M is hydrogen, an alkali metal or ammonium, and wherein B is a divalent radical derived from a dihalo, diepoxy or haloepoxy organic compound having one of the following structures

$-(CH_2)_n-$; $-(CH_2)_{n'}O-(CH_2)_{n'}-$; $-(\underset{R}{CH}-CH_2-(O-\underset{R}{CH}-CH_2)_{n'}-$;

$-H_2C-\underset{OH}{\overset{H}{C}}-(CH_2)_{n'}-$; $-H_2C-\underset{OH}{\overset{H}{C}}-\underset{OH}{\overset{H}{C}}-CH_2-$; $-H_2C-Ar-CH_2-$; and

$-H_2C-\underset{OH}{\overset{R}{C}}-Ar-\underset{OH}{\overset{R}{C}}-CH_2-$, wherein Ar is 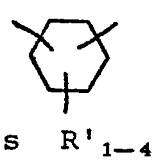 ; 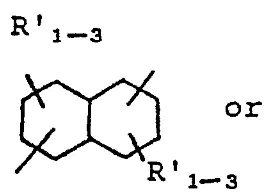 or

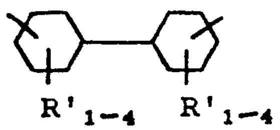

, wherein n is 1-10, n' is 1-3, and wherein R is hydrogen or methyl and R' is hydrogen, an alkyl radical or a hydroxyalkyl radical having 1 to 4 carbons, a hydroxy radical or a halogen atom, m is 1-10 and at least 50% of the Z groups are $-CH_2\overset{O}{\overset{\parallel}{P}}(OM)_2$ groups.

Preferred compounds of the invention are those wherein the B moiety is derived from 1,2-epoxy-3-chloropropane (epichlorohydrin) or 1,2-dichloroethane, wherein m is 1 or 2, the Z moiety is $CH_2\overset{O}{\overset{\parallel}{P}}(OM)_2$ and M is H, Na or $NH_4$.

The following examples illustrate the invention:

Example 1

An N-aminoethylpiperazine (AEP) based amine was prepared by reacting 22.7 g of N-aminoethylpiperazine (0.176 mole), 9.8 g of 1,2-dichlorethane (DCE) (0.099 mole), and 17.5 g of deionized water (DCE/AEP mole ratio = 0.56) in a 500-ml round-bottom reaction flask equipped with a water-cooled reflux condenser, mechanical stirrer, thermometer with a temperature controller, and an addition funnel. The reaction product was then phosphonomethylated by adding approximately 75 g of concentrated hydrochloric acid and 32.6 g (0.40 mole) of phosphorous acid to the aqueous amine solution and the reaction mixture heated to reflux and maintained for

one hour. Aqueous 37% methanal solution (28.1 g - 0.35 mole) was added through the addition funnel over a one and one-half hour period. The reaction mixture was heated at reflux for an additional three hours and then cooled.

The above procedure is then repeated using different DCE/AEP ratios.

Table I shows the use of some of the above products in retarding the setting of cement. The test procedure for the determination of retardation of setting is as follows:

1. The following ingredients were weighed:
   cement - 100 g
   water - 38 g
   additive - 0.2 g active
2. Water and liquid additive were mixed;
3. Cement was added to liquid, the bottle tightly closed and shaken to mix;
4. Bottle was placed in a pre-heated 180°F (83°C) bath;
5. Setting of cement was checked after 6 and 24 hours.

A blank (no additive) was run for comparison with each of the additives.

TABLE I

| Additive(1) mol ratio DCE/AEP | Checked at: 6 hours | 24 hours |
|---|---|---|
| 0.26 | Retarded, not set | Retarded, not set |
| 0.46 | " " " | " " " |
| 0.50(2) | " " " | " " " |
| 0.56 | " " " | " " " |
| 0.81 | " " " | " " " |
| Blank* | Set | Set |

(1) The additive is the phosphonomethylated product identified by the mol ratio of DCE/AEP.

(2) 1,2-epoxy-3-chloropropane was used in place of DCE for making this additive.

* Not an example of the invention.

CLAIMS

1. A process for retarding the setting of an aqueous cement slurry which comprises adding to said slurry an organic phosphonate, characterised in that the organic phosphonate is the product obtained by the phosphonomethylation of the reaction product of (1) a dihalo or haloepoxy organic compound with (2) N-aminoethylpiperazine; wherein the amount of the dihalo or haloepoxy compound is from 0.20 to 1.0 mole per mole of N-aminoethylpiperazine, and wherein at least 50 percent of the amine hydrogens are phosphonomethylated.

2. A process as claimed in Claim 1 wherein the dihalo compound, if present, is a $C_1$ to $C_{20}$ compound, and the haloepoxy compound, if present, is a $C_3$ to $C_{10}$ compound.

3. A process as claimed in Claim 2, wherein the dihalo or haloepoxy compound is epichlorohydrin or 1,2 dichlorethane.

4. A process for retarding the setting of an aqueous cement slurry which comprises adding to said slurry an organic phosphonate, characterised in that the organic phosphonate is a compound of the formula

$$A{-}(BA)_m$$

wherein each A independently is an organic radical having the formula.

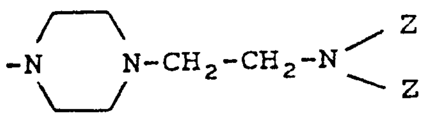 or 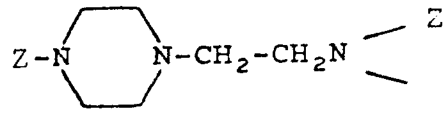

wherein each Z independently is hyrogen, hydroxyethyl, hydroxypropyl,

$$-CH_2\overset{O}{\overset{\|}{P}}\!-\!(OM)_2,\quad -CH_2\overset{O}{\overset{\|}{C}}OM$$

or BA wherein each M independently is hydrogen, an alkali metal or ammonium, and wherein each B independently is a divalent radical having one of the following structures

$$-(CH_2)_n-;\quad -(CH_2)_{n'}-O-(CH_2)_{n'}-;\quad -(\underset{R}{\underset{|}{C}}H-CH_2-(O-\underset{R}{\underset{|}{C}}H-CH_2)_{n'}-;$$

$$-H_2C-\underset{OH}{\underset{|}{\overset{H}{\overset{|}{C}}}}-(CH_2)_{n'}-;\quad -H_2C-\underset{OH}{\underset{|}{\overset{H}{\overset{|}{C}}}}-\underset{OH}{\underset{|}{\overset{H}{\overset{|}{C}}}}-CH_2-;\quad -H_2C-Ar-CH_2-;\ \text{and}$$

$$-H_2C-\underset{OH}{\underset{|}{\overset{R}{\overset{|}{C}}}}-Ar-\underset{OH}{\underset{|}{\overset{R}{\overset{|}{C}}}}-CH_2-,$$ wherein each Ar independently is 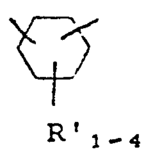 ; 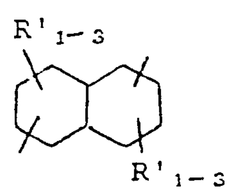 or

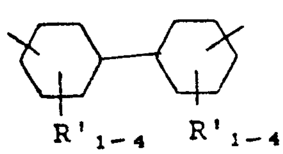

wherein each n independently is 1-10, each n' independently is 1-3, and wherein each R is independently hydrogen or methyl and each R' independently is hydrogen, an alkyl radical or a hydroxyalkyl radical having 1 to 4 carbons, a hydroxy radical or a halogen atom, m is from 1 to 10.

and at least 50% of the Z groups are $-CH_2\overset{\overset{O}{\|}}{P}-(OM)_2$ groups.

5. A process as claimed in Claim 4, wherein m is 1 or 2,

each B is $-H_2C-\underset{OH}{\overset{H}{C}}-CH_2-$ or $-C_2H_4-$ and Z is $CH_2\overset{\overset{O}{\|}}{P}-(OM)_2$.

6. A cement composition comprising a phosphonomethylated reaction product as defined in any one of Claims 1 to 3, or a compound as defined in Claim 4 or Claim 5.

European Patent Office

# EUROPEAN SEARCH REPORT

0172282
Application number

EP 84 30 5632

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| E | US-A-4 466 836 (DOW CHEMICAL) * Claims 1-3; column 3, lines 40-43 * | 1-6 | C 04 B 24/12<br>C 07 F 9/65 |
| A | US-A-4 051 110 (PETROLITE) * Abstract; column 6, table * | 1 | |
| A | CHEMICAL ABSTRACTS, vol. 98, no. 20, 16th May 1983, page 323, no. 166038s, Columbus, Ohio, US; & SU - A - 985 257 (V.S.PETROV et al.) 30-12-1982 | 1 | |
| A | CH-A- 414 645 (W.C.GRACE) | | |
| | | | TECHNICAL FIELDS SEARCHED (Int. Cl.4) |
| | | | C 04 B 24/00<br>C 07 F 9/00 |

The present search report has been drawn up for all claims

| Place of search | Date of completion of the search | Examiner |
|---|---|---|
| THE HAGUE | 17-04-1985 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82